(19) **Europäisches Patentamt**

**European Patent Office**

**Office européen des brevets**

(11) **EP 0 461 488 B1**

(12) **EUROPÄISCHE PATENTSCHRIFT**

(45) Veröffentlichungstag und Bekanntmachung des Hinweises auf die Patenterteilung:
**17.01.1996 Patentblatt 1996/03**

(51) Int. Cl.$^6$: **B29D 7/00**, B29C 47/90
// B29L7:00

(21) Anmeldenummer: **91108915.9**

(22) Anmeldetag: **31.05.1991**

(54) **Verfahren zur Herstellung von geglätteten extrudierten Vollplatten oder Folien aus thermoplastischem Kunststoff**

Method for fabricating of glazed extruded solid plates or foils from thermoplastic material

Procédé pour fabriquer des feuilles ou des plaques massives lissées extrudées en matière thermoplastique

(84) Benannte Vertragsstaaten:
**AT BE CH DE DK ES FR GB IT LI NL SE**

(30) Priorität: **09.06.1990 DE 4018530**

(43) Veröffentlichungstag der Anmeldung:
**18.12.1991 Patentblatt 1991/51**

(73) Patentinhaber: **RÖHM GMBH**
**D-64293 Darmstadt (DE)**

(72) Erfinder:
- **Gross, Heinz, Dr.-Ing.**
 **W-6101 Rossdorf (DE)**
- **Fetzer, Andreas**
 **W-6101 Bickenbach (DE)**
- **Dickhaut, Günther**
 **W-6086 Riedstadt (DE)**

(56) Entgegenhaltungen:
**DE-A- 1 778 715      DE-A- 3 028 993**
**DE-A- 3 730 043      DE-A- 3 802 095**

## Beschreibung

Die Erfindung betrifft ein Verfahren zur Herstellung von geglätteten extrudierten Vollplatten oder Folien von weniger als 1 mm Dicke aus thermoplastischem Kunststoff mit einer Glasübergangstemperatur über 50°C durch Extrusion des Kunststoffs im thermoplastischen Zustand aus einer Schlitzdüse zu einer flachen Bahn und Glätten der Oberflächen der Bahn. Der Ausdruck "Vollplatte " besagt, daß die extrudierte und geglättete Plattenbahn keine inneren Hohlräume enthält; nachfolgend wird vereinfachend der Ausdruck "Platte" verwendet.

Stand der Technik

Geglättete extrudierte Platten aus amorphem thermoplastischem Kunststoff werden gewöhnlich hergestellt, indem man die aus einer Schlitzdüse extrudierte Bahn durch ein Walzenglättwerk führt. Im Walzenspalt werden die Oberflächen der Bahn durch die Glättwalzen, die eine Temperatur unterhalb der Glasübergangstemperatur haben, schlagartig eingefroren, so daß nur das Innere der Bahn im thermoplastischen Zustand verbleibt. Ein Überschuß der thermoplastischen Kunststoffschmelze kann daher der Fließrichtung entgegen aus dem Walzenspalt verdrängt werden und bildet vor diesem eine wulstförmige Verdickung der Bahn.

Unterschreitet die Bahn eine bestimmte Dicke, so berühren sich die eingefrorenen Schichten in der Mittelebene, so daß der Kunststoff über die ganze Dicke der Bahn nicht mehr fließfähig ist. Daher kann der Überschuß nicht aus dem Walzenspalt verdrängt werden. Infolge davon treten im Walzenspalt so hohe Druckkräfte auf, daß die Oberfläche der Glättwalzen oder deren Lager oder das Maschinengestell beschädigt werden können. Derartige Druckkräfte können durch eine erhöhte Schmelzetemperatur oder durch eine höhere Laufgeschwindigkeit des Glättwerks nicht ausgeschlossen werden. In der Praxis sind kleine Dickenunterschiede über die Breite der extrudierten Bahn nicht zu vermeiden. Versucht man, einen Überschuß an extrudierter Formmasse vollständig zu vermeiden, dann besteht die Gefahr, daß der Walzenspalt nicht über die ganze Breite von der Bahn ausgefüllt und die angestrebte Glättung nicht überall erreicht wird. Der Idealzustand eines minimalen, über die Breite der Bahn gleichmäßig dicken Wulstes vor dem Walzenspalt ist aus diesem Grunde unterhalb einer bestimmten Sollstärke der Bahn kaum zu verwirklichen. Daher sind geglättete extrudierte Platten und Folien geringer Dicke mittels der herkömmlichen Glättwerkstechnologie nicht zugänglich.

Gemäß DE-A 24 32 778 werden thermoplastische Folien mit vorteilhaften Oberflächeneigenschaften, überlegener Abmessungsstabilität und annähernd isotropen Eigenschaften dadurch erzeugt, daß ein möglichst drucklos extrudierter Strang aus thermoplastischem Kunststoff sofort nach dem Austritt aus dem Extruder einer Aufnahmevorrichtung zugeführt wird, die aus zwei übereinanderliegenden, synchron angetriebenen endlosen Förderbändern besteht, zwischen denen der Strang komprimiert, ausgebreitet und flach gedrückt wird, so daß er daran haftend mitgeführt und zwischen den Förderbändern unter die Glasübergangstemperatur abgekühlt wird. Am Eintritt der Aufnahmevorrichtung werden beide Förderbänder auf einer Temperatur oberhalb der Glasübergangstemperatur des Kunststoffes gehalten und auf dem weiteren Laufweg gleichmäßig abgekühlt. Die erreichte Dickentoleranz liegt bei 0,05 bis 0,1 mm auf etwa 60 mm Breitenabstand.

Aus der JP-A 57/014065 (1983) ist ein Extrusionsverfahren bekannt, bei dem der extrudierte Strang aus thermoplastischem Kunststoff nach dem Austritt aus der Düse auf ein endlos umlaufendes Transportband aufgelegt und abkühlen gelassen wird. Eine Glättung der freiliegenden oberen Oberfläche des Stranges ist nicht vorgesehen. Man erhält eine ebene, gut verklebbare Unterseite des Stranges.

Aufgabe und Lösung

Ziel der Erfindung ist ein Verfahren zur Herstellung von geglätteten extrudierten Vollplatten oder Folien von weniger als 1 mm Dicke aus thermoplastischem Kunststoff mit einer Glasübergangstemperatur über 50°C.

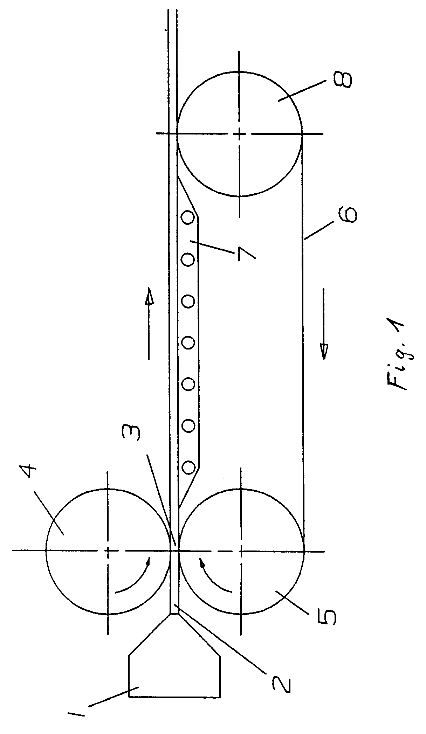

**Figur 1** zeigt in einem schematischen Schnittbild eine Extrusions- und Glättvorrichtung zur Ausführung der Erfindung.

Beim allgemein üblichen Verfahren zur Herstellung geglätteter Kunststoffbahnen wird der Kunststoff im thermoplastischen Zustand aus einer Schlitzdüse 1 zu einer flachen Bahn 2 extrudiert und die Oberflächen der Bahn geglättet, indem der extrudierte Strang in den Walzenspalt 3 eines Glättwerks, das eine geglättete Oberwalze 4 und eine Unterwalze 5 enthält, eingeführt wird und die Oberwalze auf einer Temperatur unterhalb der Glasübergangstemperatur des thermoplastischen Kunststoffes gehalten wird.

Erfindungsgemäß wird die Unterwalze 5 auf einer Temperatur im plastischen Zustandsbereich des thermoplastischen Kunststoffs gehalten und die extrudierte Bahn nach dem Austritt aus dem Walzenspalt auf einem um die Unterwalze 5 laufenden endlosen geglätteten Band 6 weiterbewegt und unter die Glasübergangstemperatur abgekühlt. Solange das endlose Band 6 an der Unterwalze 5 anliegt, ist seine Temperatur mit der der Unterwalze etwa gleich.

Da die extrudierte Bahn während der Glättung im Walzenspalt auf einer Seite im thermoplastischen Zustandsbereich gehalten wird, bleibt sie dort in der Weise plastisch verformbar, daß der Walzenspalt dauernd mit der Kunststoffschmelze gefüllt bleibt und der Überschuß der Schmelze in einen Wulst auf der Eingangsseite des Walzenspalts abgedrängt werden kann. Dadurch wird gewährleistet, daß die Bahn trotz unvermeidlicher Dickenunterschiede über ihre Breite an beiden Walzen des Glättwerks, bzw. an dem darauf umlaufenden endlosen Band dauernd anliegt, ohne daß sich ein hoher Druck im Walzenspalt aufbaut. Der Druck bleibt auf eine Höhe beschränkt, die sich aus der Schmelzviskosität der thermoplastischen Schicht und der Bahngeschwindigkeit ergibt.

Die Formung und Glättung der Bahn im Walzenspalt unter teilweise plastischen Bedingungen ermöglicht es, beidseitig geglättete Platten und Folien unter 1 mm Dicke in einer Gleichmäßigkeit und Dickengenauigkeit herzustellen, die mit herkömmlichen Glättwerken nicht erreichbar war. Die erhaltenen Platten und Folien sind praktisch frei von Orientierungen und der dadurch bedingten optischen Doppelbrechung.

Ausführung der Erfindung

Grundsätzlich läßt sich das Verfahren der Erfindung in jedem Temperaturbereich durchführen, in dem thermoplastische Kunststoffe plastisch verarbeitbar sind. Die Beschränkung auf Kunststoffe mit einer Glasübergangstemperatur über 50°C hat praktische Gründe. Kunststoffe mit darunter liegender Glasübergangstemperatur sind bei Raumtemperatur mehr oder weniger klebrig. An einer Glättung ihrer Oberfläche besteht in der Regel kein Interesse.

Geeignete Kunststoffe sind insbesondere erstarrende, harte Thermoplaste, wie PMMA, PS, PC, PVC, PVDC, ABS, SAN, PES, PET, PSU, PEI, PEEK, PMMI (vgl. DIN 7728). Sie können gefärbt oder gefüllt sein. Auch die Coextrusion unterschiedlicher oder unterschiedlich ausgerüsteter thermoplastischer Kunststoffe zu mehrschichtigen Bahnen ist beim Verfahren der Erfindung möglich.

Das Verfahren der Erfindung gestattet auch die Herstellung von Plattenbahnen von mehr als 1 mm Dicke, jedoch läßt sich bei dieser Dicke eine gleichwertige Glättung beider Oberflächen mit einem üblichen Walzenglättwerk erreichen. Erst bei Bahndicken unter 1 mm tritt der besondere Vorteil der Erfindung zutage. Typische Bahndicken der geglätteten Platten oder Folien liegen zwischen 0,01 und 1 mm, insbesondere 0,05 bis 0,5 mm.

Vorzugsweise werden nach dem Verfahren der Erfindung Platten oder Folien mit folgenden Qualitäten erzeugt:

1. Gangunterschied der optischen Doppelbrechung nicht über 50 nm beim einmaligen Durchtritt durch die Platte oder Folie (single pass)

2. Dickenschwankungen nicht über 0,05 mm bei Abmessungen bis zu 700 x 650 mm.

3. Dickenschwankungen von nicht mehr als 0,04 mm, vorzugsweise nicht mehr als 0,025 mm bei Abmessungen bis zu 300 x 300 mm.

4. Maximale Rauhtiefe ($R_{max}$ nach DIN 4768) unter 300 nm auf wenigstens einer Oberfläche, und/oder eine gemittelte Rauhtiefe ($R_z$ nach DIN 4768) unter 150 nm, vorzugsweise unter 100 nm.

5. Mittenrauhwert ($R_a$ nach DIN 4768) unter 40 nm, vorzugsweise unter 25 nm.

6. Wölbung unter 1,6 mm bei Abmessungen bis zu 300 x 300 mm. Als Wölbung wird der größte Abstand der frei liegenden Platte oder Folie von einer ebenen Unterlage bezeichnet.

7. Ein Schrumpf von nicht mehr als 16 % in Extrusionsrichtung und/oder nicht mehr als 5 % quer zur Extrusionsrichtung bei einer Lagerung bei 160 Grad C in 30 min.

Es versteht sich, daß die Erfüllung dieser Oberflächenqualitäten eine entsprechende Beschaffenheit und Ausrichtung der Glättwalzen 4,5 bzw. des Endlosbandes 6 voraussetzt.

Um eine fehlerfreie Ausbildung der extrudierten Bahn zu gewährleisten, soll die Bahn aus thermoplastischem Kunststoff mit einer solchen Geschwindigkeit aus der Extrusionsdüse gefördert werden, daß der auf der Eingangsseite des Walzenspaltes bestehende Wulst aus thermoplastischer Kunststoff-Formmasse dauernd auf einer gleichbleibenden, möglichst geringen Größe gehalten wird. Es ist daher wünschenswert, die Größe des Wulstes dauernd zu überwachen und die Extrusionsgeschwindigkeit so einzustellen, daß ein gleichmäßig kleiner Wulst dauernd aufrechterhalten wird. Gemäß DE 37 30 043 kann das z.B. dadurch geschehen, daß die Formmasse mittels einer Schmelzepumpe in die Extrusionsdüse gefördert und die Förderleistung der Schmelzepumpe mit der Geschwindigkeit des Glättwerks gekoppelt wird.

Für die Einstellung der Oberflächentemperaturen der Bahn im Walzenspalt sind die Temperaturen der Walzen 4 und 5 von ausschlaggebender Bedeutung. Die Oberflächentemperatur T der Bahn errechnet sich aus der Temperatur $T_s$ und der Wärmeeindringfähigkeit $b_s$ der Schmelze und aus der Temperatur $T_w$ und der Wärmeeindringfähigkeit $b_w$ des Walzen- bzw. Bandwerkstoffes nach der Formel

$$T = (T_s \cdot b_s + T_w \cdot b_w) / (b_s + b_w)$$

Darin sind $T_s$ die Schmelzetemperatur und $T_w$ die Walzentemperatur jeweils vor dem Walzenspalt. Da die zweite Oberfläche der Bahn im thermoplastischen Zustand verbleiben soll, ist es zweckmäßig, die Umlenkwalze 5 und das darauf laufende Band 6 etwa bei der Schmelzetemperatur zu halten. Jedenfalls muß die Temperatur im thermoplastischen Bereich des Kunststoffs liegen. Die Einstellung und Überwachung der Walzentemperaturen erfolgt mit bekannten technischen Mitteln.

Bei der Verarbeitung von Bisphenol-A-Polykarbonat und anderen Kunststoffen von vergleichbaren Verarbeitungseigenschaften wird beispielsweise die Oberwalze auf einer Temperatur im Bereich von 60 bis 140°C und die Unterwalze bzw. das darauf laufende Endlosband auf einer Temperatur im Bereich von 160 bis 300°C gehalten.

Nach dem Austritt aus dem Walzenspalt, gegebenenfalls nach Durchlaufen einer heißen Relaxationszone, tritt das Endlosband mit der darauf liegenden Bahn in die Kühlzone ein, wo das Band 6 über die Kühlplatte 7 hinweggleitet. Diese soll eine ebene Oberfläche haben, damit keine Verformungen in der abkühlenden Bahn auftreten. Man läßt zweckmäßig ein Kühlmittel im Gegenstrom zum Band 6 durch die Kühlplatte 7 fließen, so daß sie an ihrem vom Glättwerk entfernten Ende die niedrigste Temperatur hat. Stattdessen kann man auch einen Luftstrom auf die Unterseite des Bandes 6 richten. Die Bahn soll dort über die ganze Dicke eine Temperatur unterhalb der Glasübergangstemperatur erreicht haben. Während der Abkühlung friert die Unterseite der Bahn im geglätteten Zustand ein und löst sich dabei selbsttätig von dem Band. Das Endlosband wird an der hinteren Umlenkrolle 8 zum Glättwerk zurückgeführt, während die fertige extrudierte und geglättete Bahn das Band verläßt. Sie kann wahlweise gerollt oder zu Abschnitten gewünschter Länge geschnitten werden.

**Patentansprüche**

1. Verfahren zur Herstellung von geglätteten extrudierten Vollplatten oder Folien von weniger als 1 mm Dicke aus thermoplastischem Kunststoff mit einer Glasübergangstemperatur über 50°C durch Extrusion des Kunststoffs im thermoplastischen Zustand aus einer Schlitzdüse zu einer flachen Bahn und Glätten der Oberflächen der Bahn, wobei der extrudierte Strang in den Walzenspalt eines Glättwerks, das eine geglättete Oberwalze und eine Unterwalze enthält, eingeführt wird und die Oberwalze auf einer Temperatur unterhalb der Glasübergangstemperatur des thermoplastischen Kunststoffes gehalten wird,
dadurch gekennzeichnet,
daß die Unterwalze auf einer Temperatur im plastischen Zustandsbereich des thermoplastischen Kunststoffes gehalten wird und daß die extrudierte Bahn nach dem Austritt aus dem Walzenspalt auf einem um die Unterwalze laufenden endlosen geglätteten Band weiterbewegt und unter die Glasübergangstemperatur abgekühlt wird.

2. Verfahren nach Anspruch 1, dadurch gekennzeichnet, daß die Bahn aus thermoplastischem Kunststoff mit einer solchen Geschwindigkeit aus der Extrusionsdüse gefördert wird, daß die Bahn auf der Eingangsseite des Walzenspaltes einen Wulst bildet und an beiden Walzen über die gesamte Breite dauernd anliegt.

**Claims**

1. A process for preparing smoothed, extruded solid plates or sheets of less than 1 mm in thickness made of thermoplastic material with a glass transition temperature of above 50°C, by extruding the plastic material in the thermoplastic state from a slot die to form a flat sheet and smoothing the surfaces of the sheet, the extruded material being introduced into the gap between smoothing rollers comprising a smoothing top roller and a bottom roller, the top roller being kept at a temperature below the glass transition temperature of the thermoplastic material, characterised in that the bottom roller is kept at a temperature within the plastic range of the thermoplastic material and that the extruded sheet, after issuing from the gap, is conveyed on an endless smooth belt running around the bottom roller, and cooled below the glass transition temperature.

2. A process according to claim 1, characterised in that the sheet of thermoplastic material is conveyed from the extrusion nozzle at such a speed that the sheet forms a bead on the entry side of the gap and remains, over its entire width, permanently attached to the two rollers.

**Revendications**

1. Procédé de fabrication de feuilles ou plaques pleines lissées extrudées, ayant une épaisseur inférieure à 1 mm, en une matière thermoplastique ayant une température de transition vitreuse supérieure à 50°C, par extrusion de la matière plastique à l'état thermoplastique à travers une filière de façon à obtenir un panneau plat, et lissage de la surface du panneau, le boudin extrudé étant introduit dans la fente comprise entre les cylindres d'un dispositif de lissage, qui comprend un cylindre supérieur lisse et un cylindre inférieur, et le cylindre supérieur étant maintenu à une température inférieure à la température de transition vitreuse de la matière thermoplastique, caractérisé par le fait que le cylindre inférieur est maintenu à une température comprise dans la gamme où la matière thermoplastique est à l'état plastique, et que le panneau extrudé est amené, après sa sortie de la fente comprise entre les cylindres, sur une bande lisse sans fin en rotation autour du cylindre inférieur, et il est refroidi à une température inférieure à la température de transition vitreuse.

2. Procédé selon la revendication 1, caractérisé par le fait que le panneau en matière thermoplastique sort de la filière d'extrusion à une vitesse telle qu'il forme un boudin à l'entrée de la fente comprise entre les cylindres, et repose constamment sur toute la largeur des deux cylindres.

Fig. 1